Europäisches Patentamt

European Patent Office

Office européen des brevets

(19)

(11) Numéro de publication : **0 347 309 B1**

# (12) FASCICULE DE BREVET EUROPEEN

(45) Date de publication du fascicule du brevet :
**23.12.92 Bulletin 92/52**

(51) Int. Cl.$^5$ : **C09K 21/14,** C09D 5/18, C08K 3/22

(21) Numéro de dépôt : **89401647.6**

(22) Date de dépôt : **13.06.89**

(54) **Matériau de protection d'un élément en cas d'incendie.**

(30) Priorité : **16.06.88 FR 8808085**

(43) Date de publication de la demande :
**20.12.89 Bulletin 89/51**

(45) Mention de la délivrance du brevet :
**23.12.92 Bulletin 92/52**

(84) Etats contractants désignés :
**BE DE ES GB IT NL**

(56) Documents cités :
**FR-A- 1 320 362
FR-A- 2 614 035
US-A- 4 277 456**

(73) Titulaire : **AEROSPATIALE Société Nationale Industrielle
37, Boulevard de Montmorency
F-75781 Paris Cédex 16 (FR)**

(72) Inventeur : **Pastureau, Nicole
3 rue du Canter
F-33320 Eysines (FR)**

(74) Mandataire : **Rinuy, Santarelli
14, avenue de la Grande Armée
F-75017 Paris (FR)**

EP 0 347 309 B1

## Description

Matériau de protection d'un élément en cas d'incendie.

La presente invention concerne un matériau de protection incendie destiné à limiter au niveau le plus bas, techniquement possible, la température d'un élément soumis à une agression thermique, par exemple un incendie dont la température de flamme se situe entre 700 et 1000°C.

Elle vise également un tel matériau qui soit souple, de faible coût, de mise en oeuvre aisée, ne nécessitant pas un travail en atelier spécialisé mais permettant, au contraire, une mise en oeuvre directe et commode sur le terrain ou le chantier, en faisant appel à des techniques simples telles que application par projection, réalisation par extrusion ou moulage.

On connaît à l'heure actuelle un grand nombre de matériaux de protection en cas d'incendie. Leur conception, leur mise au point, leur réalisation et leur utilisation sont fondées sur l'un ou l'autre des deux phénomènes, à savoir celui de l'intumescence ou celui qui vise ou tend à retarder le plus possible la propagation de la flamme.

L'intumescence est un phénomène bien connu qui est défini comme mettant à profit dans la lutte contre l'incendie la propriété que présentent certains corps ou certaines substances de gonfler, de se dilater ou de s'expanser sous l'action de la chaleur ou d'une élévation de température formant ainsi barrière contre une agression thermique. Ce type de substances impliquant l'action conjuguée de porogènes est largement utilisé dans des compositions de peintures qui sont alors constituées d'un liant permettant la formation d'un film, d'un composé riche en carbone et d'un agent intumescent ou porogène. Parmi les agents porogènes les plus couramment préconisés, on citera les phosphate et sulfate d'ammonium, l'urée, le cyandiamide, l'acide sulfamique, l'acide borique, le borate de sodium ou borax.

Ce phénomène d'intumescence est exploité aussi dans différents autres matériaux. A titre d'exemples simplement illustratifs de tels matériaux, on citera ceux des brevets des Etats-Unis d'Amérique US-A-4.299.872; 4.160.073 ; 2.452.054 et 2.912.392.

L'efficacité de ces matériaux est liée à la formation, sous l'action de la chaleur, d'une couche carbonée poreuse et épaisse qui agit comme un isolant classique. Mais cette efficacité est alors limitée en durée et en performance, puisqu'il est bien connu que les isolants classiques permettent seulement de limiter pendant un temps court l'élévation de température d'un élément soumis à un incendie.

En outre, de tels matériaux peuvent, dans certaines conditions, donner lieu à un fonctionnement aléatoire. En effet, la couche poreuse isolante ne possède qu'une faible résistance structurale et peut, de ce fait, par exemple sous l'effet de l'abrasion, être partiellement ou totalement détruite, permettant ainsi la pénétration du feu jusqu'à l'élément à protéger.

Pour permettre à ce type de matériaux de donner le maximum de satisfaction, il faut prévoir un emplacement de dimensions suffisantes pour que leur expansion se produise dans son intégralité, certains d'entre eux nécessitant pour cette expansion jusqu'à dix voire vingt fois leur volume initial. On comprendra que cette condition dimensionnelle n'est pas toujours réalisable dans la pratique.

Un autre inconvénient réside aussi dans le fait que l'on assiste à un dégagement de volumes importants de gaz et de fumées, parfois toxiques, ce qui limite les domaines dans lesquels ces matériaux peuvent être utilisés.

Pour ce qui est des matériaux isolants retardateurs de flamme, ils sont constitués le plus souvent d'un liant époxy ou phénolique contenant des agents dits "retardateurs de flamme". Ces derniers limitent la température du matériau servant à la protection en cas d'incendie à un niveau inférieur à sa température d'inflammation. Parmi les agents retardateurs de flamme les plus cités, on notera les borates, les phosphates et certains oxydes comme l'oxyde d'antimoine.

Il se trouve que ces matériaux renferment souvent des charges susceptibles de se décomposer suivant un processus endothermique. Elles donnent lieu aussi à une succession de réactions endothermiques qui se produisent à des températures de plus en plus élevées.

On citera dans ce domaine les brevets des Etats-Unis d'Amérique US-A-4.521.543; 4.438.028; 4.001.126 et 3.114.840 ainsi que les brevets français N° 81.16303; 83.10560 et 85.19145.

Ces matériaux sont surtout destinés à protéger des éléments soumis à des flux thermiques importants. Ils sont plus largement utilisés dans le domaine spatial et sont proposés sous la forme de matériaux finis destinés ensuite à être appliqués sur les structures à protéger.

En raison du phénomène en cause faisant appel à une succession de réactions endothermiques, la température des éléments protégés augmente progressivement tout au long de l'agression thermique ou de l'action du flux thermique.

La présente invention vise un matériau de protection d'un élément en cas d'incendie faisant intervenir simultanément les deux phénomènes d'intumescence et d'endothermicité pour obtenir des caractéristiques de protection optimales maintenant l'élément à protéger à une température inférieure à ou de l'ordre de 150°C lorsque celui-ci est soumis à une agression thermique correspondant à une température de flamme de 700 à 1000°C pendant une durée d'au moins une heure pour une épaisseur du matériau de 10 à 20 mm.

Ainsi le matériau selon l'invention présentant ces propriétés particulières est essentiellement caractérisé en ce que c'est un matériau souple constitué :

- d'un liant qui est un élastomère de silicone dans une proportion de 30 à 35 % en poids ;
- d'une charge de renforcement qui est un oxyde métallique compatible avec ledit élastomère de silicone dans une proportion de 17 à 23 % en poids ;
- d'une charge active qui est un agent intumescent donnant également lieu à une réaction endothermique dans une proportion de 38 à 45 % en poids ; et
- d'une charge isolante dans une proportion de 5 à 10 % en poids,
   ces proportions étant par rapport au poids total dudit matériau.
- Le liant élastomère de silicone est choisi parmi les élastomères de silicone qui polymérisent par polycondensation et les élastomères de silicone qui polymérisent par polyaddition ;
- la charge de renforcement est choisie parmi les oxydes de titane de type rutile, avantageusement une variété d'oxyde de titane contenant au moins 90 % de $TiO_2$ (en poids) et ayant subi des traitements de surface (silanes) le rendant compatible avec les élastomères de silicone ;
- la charge active est le borax (tétraborate disodique décahydraté) ;
- la charge isolante est choisie parmi le mica et la vermiculite.

Avec un tel matériau, on constate que sous l'action de la chaleur (en fait dès que la température atteint 100°C), la charge active (le borax) se décompose en donnant de l'eau qui se vaporise et qui se comporte vis-à-vis de la protection en cas d'incendie comme un agent intumescent. Cette vaporisation s'effectue également suivant une réaction endothermique, laquelle contribue à abaisser la température de surface du matériau de protection.

L'efficacité de ce matériau est ainsi basée (comme indiqué précédemment) sur la simultanéité des deux phénomènes d'intumescence et d'endothermicité de la réaction de vaporisation de l'eau contenue dans la charge active. Cela ne peut être obtenu qu'en choisissant judicieusement les constituants du matériau, de même que leurs proportions. Ainsi, en particulier, l'ampleur de l'intumescence doit être contrôlée et limitée. Elle doit conduire à une libération progressive mais suffisante vis-à-vis de l'agression thermique, de l'activité de la charge endotherme sans empêchement du libre déroulement ou de la libre manifestation du phénomène d'intumescence. Le rapport optimal d'intumescence doit donc se situer avantageusement entre 3/1 et 5/1 (en volume).

Par ailleurs, on notera que le choix de la nature et des proportions des matériaux est dicté par le fait qu'une intumescence trop faible ou trop forte conduit à une diminution de la durée du palier de stabilisation de température de l'élément à protéger : dans le cas d'une intumescence trop faible, par limitation excessive de la dégradation de la charge active et augmentation de la conductivité thermique globale du matériau et dans le cas d'une intumescence trop forte, par une dégradation trop rapide de la charge active et par un risque de dégradation partielle de la couche intumescente devenue fragile.

Cette intumescence et cette vitesse de dégradation optimales associées à une conductivité thermique globale satisfaisante du matériau sont obtenues, conformément à l'invention, avec un liant élastomère de silicone et une charge active, tous deux correctement choisis et utilisés dans des proportions bien déterminées pour autant que l'on introduise aussi dans la formulation, en respectant également des proportions bien déterminées, d'une part une charge de renforcement (oxyde de titane) qui améliore la résistance structurale de la couche intumescente tout en agissant aussi comme retardateur de flamme et, d'autre part, une charge isolante (mica, vermiculite) qui permet de disposer d'un matériau dont les performances sont grandement améliorés grâce à la diminution de la conductivité thermique du matériau sain.

En appliquant l'invention, l'épaisseur permettant une bonne protection en cas d'incendie, se situe entre 10 et 20 mm, suivant la durée de palier de stabilisation et le niveau de température (< 150°C) autorisé par l'élément à protéger. Une épaisseur de 14 mm correspond au compromis idéal : intumescence - vitesse de dégradation de la charge active - résistance mécanique de la couche de surface par suite d'une agression thermique.

Le matériau de l'invention se prête, dans le but principal de constituer un écran thermique pour un élément à protéger en cas d'incendie, à différentes techniques, aussi bien de formage dudit écran que d'application. On citera entre autres les techniques d'enduction par spatulage, d'extrusion, de moulage et autres techniques bien connues.

De façon générale, le procédé permettant d'obtenir ce matériau comportera les stades opératoires de mélange des constituants effectués dans l'ordre suivant :

À la quantité nécessaire de liant d'élastomère de silicone, on incorpore d'abord la quantité nécessaire de la charge de renforcement puis la quantité nécessaire de la charge active et enfin la quantité nécessaire de la charge isolante.

L'incorporation des charges dans l'élastomère de silicone de base se fait généralement, avantageusement, au moyen d'un malaxeur planétaire. La vitesse de rotation de ce malaxeur ne doit pas être trop élevée pour éviter un échauffement important du mélange qui conduirait à une diminution prématurée de l'efficacité de la charge donnant lieu à la réaction endothermique désirée.

Suivant le type de mise en oeuvre adopté, on choisit soit un élastomère de silicone qui polymérise par polycondensation, soit un élastomère de silicone qui polymérise par polyaddition.

Dans le cas de la réalisation du matériau pour son application immédiate sur l'élément à protéger, on utilise de préférence l'élastomère qui polymérise par polycondensation, donc avec l'appoint d'un catalyseur qui est en général un sel d'étain comme, par exemple, le dilaurate de dibutylétain ou l'octoate d'étain, ce dernier assurant avantageusement une polymérisation plus rapide à température ambiante.

Par contre, dans le cas d'une fabrication du matériau en atelier au moyen, par exemple, de presses à injecter en vue de l'application ultérieure d'une pièce préfaçonnée sur un élément à protéger, on utilisera, de préférence, l'élastomère qui polymérise par polyaddition.

De même, on préférera utiliser un élastomère de silicone dont la viscosité est inférieure à 1500 mPa.S à 25°C. Cependant, on pourra utiliser des bases de silicones dont la viscosité est un peu supérieure, à condition d'ajouter une huile polysiloxane de faible viscosité (50, 100, 300 mPa.S) de manière à rendre possible l'incorporation des charges actives, isolantes et de renforcement. La quantité d'huile utilisée ne devra alors pas dépasser 5 % en poids de la composition totale.

Quel que soit le mode choisi pour la réalisation du matériau de protection, il faut en assurer son adhérence sur l'élément à protéger, que ce dernier soit métallique, du type matériau composite, etc. Cette adhérence peut être obtenue :

- soit par application d'une couche d'un enduit primaire à base de silicone en général, surtout lorsque l'application du matériau de protection est réalisée par projection selon un procédé bien connu après, bien entendu, que la surface à protéger a été traitée de façon appropriée, par exemple dégraissée, sablée, polie, etc ;
- soit par collage au moyen d'adhésifs appropriés bien connus.

On peut également faire appel à certains liants pour ces élastomères de silicones qui sont eux-mêmes auto-adhésifs et qui, de ce fait, ne nécessiteraient aucun traitement de surface particulier préalable. Il est toutefois important que le choix des moyens assurant l'adhérence puisse répondre à la condition de ne pas se désolidariser de l'élément à protéger au cours d'une agression thermique.

Exemple 1

On a réalisé la composition suivante et on a façonné au moyen de cette composition un panneau de protection d'un élément pour en évaluer l'efficacité au cours d'un incendie :

```
- élastomère de silicone RTV-121*      : 33 % en poids,
- TiO₂ Cl 220+                          : 19 % en poids,
- borax •                               : 38 % en poids,
- vermiculite                           : 10 % en poids.
(*  : produit commercialisé par la société Rhône-Poulenc
contenant un élastomère de silicone à catalyseur étain ;
   +  :  variété  d'oxyde  de titane commercialisé par la
Société Industrielle du Titane A ;
    •  : tétraborate disodique décahydraté).
```

Essai d'incendie :
- température de flamme : 800°C ;
- distance entre le matériau à protéger et la flamme : 200 mm.
Les résultats de cet essai figurent au tableau 1 ci-après :

Tableau 1

| Epaisseur du matériau | Température maximale au niveau de l'élément à protéger | Durée de protection |
|---|---|---|
| 10,6 mm | 100 °C | Au moins une heure |
| 14,8 mm | 78 °C | Au moins une heure |

## Exemple 2

On a réalisé un mélange avec les mêmes composants dans les proportions suivantes :

- élastomère de silicone RTV-12*    : 30,2 % en poids,
- $TiO_2$ Cl 220                    : 18,7 % en poids,
- borax                             : 44,4 % en poids,
- vermiculite                       :  6,7 % en poids.

(* : commercialisé par la société General Electric, contenant un élastomère de silicone à catalyseur étain).

Essai d'incendie

Comme dans l'exemple 1, on a procédé à des essais d'incendie au moyen d'un écran obtenu à partir de cette composition :

- température de flamme : 800°C ;
- distance entre l'élément à protéger et la flamme : 200mm.

Les résultats de cet essai figurent au tableau 2 ci-après :

Tableau 2

| Epaisseur du matériau | Température maximale au niveau de l'élément à protéger | Durée de protection |
|---|---|---|
| 10,2mm | 140 °C | Au moins une heure |
| 13,4 mm | 140 °C | Au moins une heure |

## Exemple 3

On a réalisé une composition avec les constituants tels que ceux figurant aux exemples 1 et 2 ci-dessus, mais ne contenant pas de vermiculite et on a procédé à des essais d'incendie au moyen d'un matériau obtenu à partir de cette composition :

EP 0 347 309 B1

```
- élastomère de silicone RTV-141*      : 35 % en poids,

- TiO  Cl 220                          : 23 % en poids,
     2
- borax                                : 42 % en poids.

(* produit commercialisé par la Société Rhône Poulenc

contenant un élastomère de silicone à catalyseur étain).
```

Essai d'incendie :
- température de flamme : 800°C ;
- distance entre l'élément à protéger et la flamme : 200 mm.

Les résultats obtenus font apparaître que si on laisse la possibilité au matériau de protection de s'expanser, à partir d'une épaisseur initiale de 8mm, la température maximale atteinte était de 120°C, pour une durée d'agression de 65 minutes.

Par contre, si le matériau de protection n'avait pas la possibilité de s'expanser, en lui appliquant une grille métallique à très fines perforations, la température maximale atteinte par l'élément à protéger était de 200°C pour une épaisseur initiale du matériau de 10 mm. La durée pendant laquelle une protection pouvait être assurée pour cette température était de 31 minutes.

## Exemple 4

On a procédé comme dans les exemples précédents, avec la composition suivante, ne contenant pas de TiO$_2$ :
- RTV-141        : 44 % en poids,
- borax          : 48 % en poids,
- vermiculite    : 8 % en poids.

L'essai d'incendie effectué dans les mêmes conditions que précédemment avec une température de flamme de 800°C, une distance de 200 mm entre le matériau à protéger et la flamme, a donné les résultats suivants :
- température maximum atteinte : 500°C ;
- épaisseur du matériau de protection : 12 mm ;
- durée d'incendie : une heure.

## Exemple 5

Cet exemple donne les résultats obtenus avec une composition pour le matériau de protection dans laquelle la vermiculite a été remplacée par des microsphères de silice :
- RTV-121                     : 33 % en poids,
- borax                       : 38 % en poids,
- TiO$_2$                     : 19 % en poids,
- microsphères de silice      : 10 % en poids.

En procédant à l'essai d'incendie dans les mêmes conditions que précédemment, avec une épaisseur du matériau de protection de 10 mm, on a obtenu au niveau de l'élément à protéger une température maximum de 270°C après une durée de 26 minutes de chauffage.

## Exemple 6

On a procédé de la même manière que précédemment avec la composition suivante dans laquelle le TiO$_2$ a été remplacé par de la silice broyée :
- RTV-121           : 33 % en poids,
- borax             : 38 % en poids,
- silice broyée     : 19 % en poids,
- vermiculite       : 10 % en poids.

Les résultats pour une épaisseur du matériau de 10 mm dans un essai d'incendie effectué dans les mêmes conditions que celles indiquées ci-dessus donnent une température maximale atteinte au niveau de l'élément à protéger de 320°C après une durée de 16 minutes de chauffage.

Ces exemples montrent l'intérêt tout particulier et l'efficacité spécifique d'un matériau réalisé selon l'invention pour une protection à une température maximale inférieure à ou de l'ordre de 150°C, avec une épaisseur comprise entre 10 et 20 mm. On constate qu'une modification de la nature des constituants ou de leur proportions ne permet pas d'obtenir ces objectifs.

## Revendications

### Revendications pour les Etats contractants suivants : BE, DE, GB, IT, NL

1. Matériau de protection en cas d'incendie faisant intervenir simultanément les deux phénomènes d'intumescence et d'endothermicité pour obtenir des caractéristiques de protection optimales maintenant l'élément à protéger à une température inférieure à ou de l'ordre de 150°C lorsque celui-ci est soumis à une agression thermique correspondant à une température de flamme de 700 à 1000°C pendant une durée d'au moins une heure pour une épaisseur du matériau de 10 à 20 mm, caractérisé en ce que c'est un matériau souple constitué :
   - d'un liant qui est un élastomère de silicone dans une proportion de 30 à 35 % en poids ;
   - d'une charge de renforcement qui est un oxyde métallique compatible avec ledit élastomère de silicone dans une proportion de 17 à 23 % en poids choisi parmi les oxydes de titane du type rutile;
   - d'une charge active qui est un agent intumescent donnant également lieu à une réaction endothermique, à savoir le borax (tétraborate disodique décahydraté), dans une proportion de 38 à 45 % en poids et
   - d'une charge isolante choisie parmi le mica et la vermiculite dans une proportion de 5 à 10 % en poids; ces proportions étant par rapport au poids dudit matériau.

2. Matériau selon la revendication 1, caractérisé en ce que le liant élastomère de silicone est choisi parmi les élastomères de silicone qui polymérisent par polycondensation et les élastomères de silicone qui polymérisent par polyaddition.

3. Matériau selon la revendication 1 ou 2, caractérisé en ce que la charge de renforcement est une variété d'oxyde de titane contenant au moins 90% de $TiO_2$ (en poids) et ayant subi des traitements de surface (silanes) le rendant compatible avec les élastomères de silicone.

4. Procédé permettant d'obtenir le matériau selon l'une quelconque des revendications 1 à 3, caractérisé en ce qu'il comporte des stades opératoires de mélange des constituants effectués dans l'ordre suivant : à la quantité nécessaire de liant d'élastomère de silicone, on incorpore d'abord la quantité nécessaire de la charge de renforcement puis la quantité nécessaire de la charge active et enfin la quantité nécessaire de la charge isolante.

### Revendications pour l'Etat contractant suivant : ES

1. Matériau de protection en cas d'incendie faisant intervenir simultanément les deux phénomènes d'intumescence et d'endothermicité pour obtenir des caractéristiques de protection optimales maintenant l'élément à protéger à une température inférieure à ou de l'ordre de 150°C lorsque celui-ci est soumis à une agression thermique correspondant à une température de flamme de 700 à 1000°C pendant une durée d'au moins une heure pour une épaisseur du matériau de 10 à 20 mm, matériau essentiellement caractérisé en ce que c'est un matériau souple constitué :
   - d'un liant qui est un élastomère de silicone dans une proportion de 30 à 35 % en poids ;
   - d'une charge de renforcement qui est un oxyde métallique compatible avec ledit élastomère de silicone dans une proportion de 17 à 23 % en poids choisi parmi les oxydes de titane du type rutile;
   - d'une charge active qui est un agent intumescent donnant également lieu à une réaction endothermique, à savoir le borax (tétraborate disodique décahydraté), dans une proportion de 38 à 45 % en poids et
   - d'une charge isolante choisie parmi le mica et la vermiculite dans une proportion de 5 à 10 % en poids; ces proportions étant par rapport au poids dudit matériau.

2. Matériau selon la revendication 1, caractérisé en ce que le liant élastomère de silicone est choisi parmi les élastomères de silicone qui polymérisent par polycondensation et les élastomères de silicone qui polymérisent par polyaddition.

3. Matériau selon la revendication 1 ou 2, caractérisé en ce que la charge de renforcement est une variété d'oxyde de titane contenant au moins 90% de TiO$_2$ (en poids) et ayant subi des traitements de surface (silanes) le rendant compatible avec les élastomères de silicone.

4. Procédé de préparation d'un matériau de protection en cas d'incendie faisant intervenir simultanément les deux phénomènes d'intumescence et d'endothermicité pour obtenir des caractéristiques de protection optimales maintenant l'élément à protéger à une température inférieure à ou de l'ordre de 150°C lorsque celui-ci est soumis à une agression thermique correspondant à une température de flamme de 700 à 1000°C pendant une durée d'au moins une heure pour une épaisseur du matériau de 10 à 20 mm, matériau souple constitué :
   - d'un liant qui est un élastomère de silicone dans une proportion de 30 à 35 % en poids ;
   - d'une charge de renforcement qui est un oxyde métallique compatible avec ledit élastomère de silicone dans une proportion de 17 à 23 % en poids choisi parmi les oxydes de titane du type rutile;
   - d'une charge active qui est un agent intumescent donnant également lieu à une réaction endothermique, à savoir le borax (tétraborate disodique décahydraté), dans une proportion de 38 à 45 % en poids et
   - d'une charge isolante choisie parmi le mica et la vermiculite dans une proportion de 5 à 10 % en poids;
       ces proportions étant par rapport au poids dudit matériau, caractérisé en ce qu'il comporte des stades opératoires de mélange des constituants effectués dans l'ordre suivant : à la quantité nécessaire de liant d'élastomère de silicone, on incorpore d'abord la quantité nécessaire de la charge de renforcement puis la quantité nécessaire de la charge active et enfin la quantité nécessaire de la charge isolante.

5. Procédé selon la revendication 4, caractérisé en ce que le liant élastomère de silicone est choisi parmi les élastomères de silicone qui polymérisent par polycondensation et les élastomères de silicone qui polymérisent par polyaddition.

6. Procédé selon la revendication 4 ou 5, caractérisé en ce que la charge de renforcement est une variété d'oxyde de titane contenant au moins 90% de TiO$_2$ (en poids) et ayant subi des traitements de surface (silanes) le rendant compatible avec les élastomères de silicone.

**Patentansprüche**

**Patentansprüche für folgende Vertragsstaaten : BE, DE, GB, IT, NL**

1. Material zum Schützen im Brandfall, welches gleichzeitig zwei Vorgänge, nämlich Aufquellen und Wärmeaufnahme, bewirkt, um optimale Schutzeigenschaften zu erreichen, indem es das zu schützende Element auf einer Temperatur unterhalb von oder im Bereich von 150°C hält, wenn dieses einer thermischen Beanspruchung ausgesetzt ist, die einer Flammentemperatur von 700 bis 1000°C während eines Zeitraums von mindestens einer Stunde für eine Materialstärke von 10 bis 20 mm entspricht, dadurch gekennzeichnet, daß es sich um ein biegsames Material handelt, bestehend aus:
   - einem Bindemittel, welches ein Silikonelastomeres ist, in einem Anteil von 30 bis 35 Gew. -%,
   - einem Verstärkungsmittel, welches ein mit dem genannten Silikonelastomeren verträgliches Metalloxid ist, in einem Anteil von 17 bis 23 Gew.-%, ausgewählt unter den Titanoxiden vom Rutiltyp,
   - einer aktiven Substanz, welche ein Quellmittel ist und gleichermaßen Anlaß zu einer endothermen Reaktion gibt, nämlich Borax (Dinatriumtetraborat-Decahydrat), in einem Anteil von 38 bis 45 Gew.-% und
   - einer isolierenden Substanz, ausgewählt unter Glimmer und Vermiculit, in einem Anteil von 5 bis 10 Gew. -%,
       wobei sich diese Anteile auf das Gewicht des genannten Materials beziehen.

2. Material nach Anspruch 1, dadurch gekennzeichnet, daß das Silikonelastomer-Bindemittel ausgewählt ist unter den Silikonelastomeren, die durch Polykondensation polymerisieren, und denjenigen Silikonelastomeren, die durch Polyaddition polymerisieren.

3. Material nach Anspruch 1 oder 2, dadurch gekennzeichnet, daß das Verstärkungsmittel eine Modifikation von Titanoxid ist, die mindestens 90% TiO$_2$ (gewichtsbezogen) enthält und Oberflächenbehandlungen (Silane) unterworfen wurde, welche dieses mit den Silikonelastomeren verträglich machen.

EP 0 347 309 B1

**4.** Verfahren, welches die Gewinnung von Material nach einem der Ansprüche 1 bis 3 ermöglicht, dadurch gekennzeichnet, daß es Arbeitsstufen des Mischens der Bestandteile aufweist, die in der folgenden Reihenfolge ausgeführt werden: in die erforderliche Menge des Silikonelastomer-Bindemittels arbeitet man zuerst die erforderliche Menge des Verstärkungsmittels, sodann die erforderliche Menge der aktiven Substanz und schließlich die erforderliche Menge des isolierenden Substanz ein.

**Patentansprüche für folgenden Vertragsstaat : ES**

**1.** Material zum Schützen im Brandfall, welches gleichzeitig zwei Vorgänge, nämlich Aufquellen und Wärmeaufnahme, bewirkt, um optimale Schutzeigenschaften zu erreichen, indem es das zu schützende Element auf einer Temperatur unterhalb von oder im Bereich von 150°C hält, wenn dieses einer thermischen Beanspruchung ausgesetzt ist, die einer Flammentemperatur von 700 bis 1000°C während eines Zeitraums von mindestens einer Stunde für eine Materialstärke von 10 bis 20 mm entspricht, wobei das Material im wesentlichen dadurch gekennzeichnet ist, daß es sich um ein biegsames Material handelt, bestehend aus:
- einem Bindemittel, welches ein Silikonelastomeres ist, in einem Anteil von 30 bis 35 Gew. -%,
- einem Verstärkungsmittel, welches ein mit dem genannten Silikonelastomeren verträgliches Metalloxid ist, in einem Anteil von 17 bis 23 Gew.-%, ausgewählt unter den Titanoxiden vom Rutiltyp,
- einer aktiven Substanz, welche ein Quellmittel ist und gleichermaßen Anlaß zu einer endothermen Reaktion gibt, nämlich Borax (Dinatriumtetraborat-Decahydrat), in einem Anteil von 38 bis 45 Gew.-% und
- einer isolierenden Substanz, ausgewählt unter Glimmer und Vermiculit, in einem Anteil von 5 bis 10 Gew. -%,
    wobei sich diese Anteile auf das Gewicht des genannten Materials beziehen.

**2.** Material nach Anspruch 1, dadurch gekennzeichnet, daß das Silikonelastomer-Bindemittel ausgewählt ist unter den Silikon-Elastomeren, die durch Polykondensation polymerisieren, und denjenigen Silikon-Elastomeren, die durch Polyaddition polymerisieren.

**3.** Material nach Anspruch 1 oder 2, dadurch gekennzeichnet, daß das Verstärkungsmittel eine Modifikation von Titanoxid ist, die mindestens 90% $TiO_2$ (gewichtsbezogen) enthält und Oberflächenbehandlungen (Silane) unterworfen wurde, welche dieses mit den Silikonelastomeren verträglich machen.

**4.** Verfahren zum Herstellen eines Materials zum Schützen im Brandfall, welches gleichzeitig zwei Vorgänge, nämlich Aufquellen und Wärmeaufnahme, bewirkt, um optimale Schutzeigenschaften zu erreichen, indem es das zu schützende Element auf einer Temperatur unterhalb von oder im Bereich von 150°C hält, wenn dieses einer thermischen Beanspruchung ausgesetzt ist, die einer Flammentemperatur von 700 bis 1000°C während eines Zeitraums von mindestens einer Stunde für eine Materialstärke von 10 bis 20 mm entspricht, wobei das flexible Material aus
- einem Bindemittel, welches ein Silikonelastomeres ist, in einem Anteil von 30 bis 35 Gew. -%,
- einem Verstärkungsmittel, welches ein mit dem genannten Silikonelastomeren verträgliches Metalloxid ist, in einem Anteil von 17 bis 23 Gew.-%, ausgewählt unter den Titanoxiden vom Rutiltyp,
- einer aktiven Substanz, welche ein Quellmittel ist und gleichermaßen Anlaß zu einer endothermen Reaktion gibt, nämlich Borax (Dinatriumtetraborat-Decahydrat), in einem Anteil von 38 bis 45 Gew.-% und
- einer isolierenden Substanz, ausgewählt unter Glimmer und Vermiculit, in einem Anteil von 5 bis 10 Gew. -%
    besteht und sich diese Anteile auf das Gewicht des genannten Materials beziehen, dadurch gekennzeichnet, daß die Arbeitsstufen beim Mischen der Bestandteile in der folgenden Reihenfolge ausgeführt werden: in die erforderliche Menge des Silikonelastomer-Bindemittels arbeitet man zuerst die erforderliche Menge des Verstärkungsmittels, sodann die erforderliche Menge der aktiven Substanz und schließlich die erforderliche Menge der isolierenden Substanz ein.

**5.** Verfahren nach Anspruch 4, dadurch gekennzeichnet, daß das Silikonelastomer Bindemittel ausgewählt ist unter den Silikonelastomeren, die durch Polykondensation polymerisieren, und denjenigen Silikonelastomeren, die durch Polyaddition polymerisieren.

**6.** Verfahren nach Anspruch 4 oder 5, dadurch gekennzeichnet, daß das Verstärkungsmittel eine Modifikation von Titanoxid ist, die mindestens 90% TiO$_2$ (gewichtsbezogen) enthält und Oberflächenbehandlungen (Silane) unterworfen wurde, welche diese mit den Silikonelastomeren verträglich machen.

## Claims

### Claims for the following Contracting States : BE, DE, GB, IT, NL

1. A fire protection material simultaneously using the two phenomena of intumescence and endothermicity to obtain optimum protection characteristics maintaining the element to be protected at a temperature below or in the order of 150°C when it is subjected to thermal attack corresponding to a flame temperature of 700 to 1000°C for a duration of at least one hour for a thicknes of the material between 10 and 20 mm, characterized in that it is a flexible material formed by:
   - a binder (silicone elastomer) in a proportion of 30 to 35% by weight;
   - a reinforcing charge (a metal oxide compatible with said silicone elastomer) in a proportion of 17 to 23% by weight, selected from the titanium oxides of rutile type;
   - an active charge which is an intumescent agent also producing an endothermic reaction, namely borax (decahydrated disodium tetraborate) in a proportion of 38 to 45% by weight; and
   - an insulating charge selected from mica and vermiculite in a proportion of 5 to 10% by weight,
   said proportions being related to the weight of said material.

2. A material according to claim 1, characterized in that the silicone elastomer binder is selected from the silicone elastomers polymerized by polycondensation and the silicone elastomers polymerized by polyaddition.

3. A material according to claims 1 or 2, characterized in that the reinforcing charge is a variety of titanium oxide containing at least 90% by weight TiO$_2$ which has been subjected to surface treatments (silanes) rendering said oxide compatible with the silicone elastomers.

4. A method of obtaining the material according to any of claims 1 to 3, characterized in that it comprises the operational stages of mixing the constituents, performed in the following order: first the necessary quantity of the reinforcing charge, then the necessary quantity of the active charge, and finally the necessary quantity of the insulating charge are incorporated in the necessary quantity of silicone elastomer binder.

### Claims for the following Contracting State : ES

1. A fire protection material simultaneously using the two phenomena of intumescence and endothermicity to obtain optimum protection characteristics maintaining the element to be protected at a temperature below or in the order of 150°C when it is subjected to thermal attack corresponding to a flame temperature of 700 to 1000°C for a duration of at least one hour for a thickness of the material between 10 and 20 mm, the material being mainly characterized in that it is a flexible material formed by:
   - a binder (silicone elastomer) in a proportion of 30 to 35% by weight;
   - a reinforcing charge (a metal oxide compatible with said silicone elastomer) in a proportion of 17 to 23% by weight, selected from the titanium oxides of rutile type;
   - an active charge which is an intumescent agent also producing an endothermic reaction, namely borax (decahydrated disodium tetraborate) in a proportion of 38 to 45% by weight; and
   - an insulating charge selected from mica and vermiculite in a proportion of 5 to 10% by weight,
   said proportions being related to the weight of said material.

2. A material according to claim 1, characterized in that the silicone elastomer binder is selected from the silicone elastomers polymerized by polycondensation and the silicone elastomers polymerized by polyaddition.

3. A material according to claims 1 or 2, characterized in that the reinforcing charge is a variety of titanium oxide containing at least 90% by weight TiO$_2$ which has been subjected to surface treatments (silanes) rendering said oxide compatible with the silicone elastomers.

4. A method of obtaining a fire protection material simultaneously using the two phenomena of intumescence and endothermicity to obtain optimum protection characteristics maintaining the element to be protected at a temperature below or in the order of 150°C when it is subjected to thermal attack corresponding to a flame temperature of 700 to 1000°C for a duration of at least one hour for a thickness of the material between 10 and 20 mm, said flexible material being formed by:

- a binder (silicone elastomer) in a proportion of 30 to 35% by weight;
- a reinforcing charge (a metal oxide compatible with said silicone elastomer) in a proportion of 17 to 23% by weight, selected from the titanium oxides of rutile type;
- an active charge which is an intumescent agent also producing an endothermic reaction, namely borax (decahydrated disodium tetraborate) in a proportion of 38 to 45% by weight; and
- an insulating charge selected from mica and vermiculite in a proportion of 5 to 10% by weight;

said proportions being in relation to the weight of the material, characterized in that it comprises the operational stages of mixing the constituents, performed in the following order: first the necessary quantity of the reinforcing charge, then the necessary quantity of the active charge, and finally the necessary quantity of the insulating charge are incorporated in the necessary quantity of silicone elastomer binder.

5. A method according to claim 4, characterized in that the silicone elastomer binder is selected from the silicone elastomers polymerized by polycondensation and the silicone elastomers polymerized by polyaddition.

6. A method according to claims 4 or 5, characterized in that the reinforcing charge is a variety of titanium oxide containing at least 90% by weight $TiO_2$ which has been subjected to surface treatments (silanes) rendering said oxide compatible with the silicone elastomers.